Europäisches Patentamt

European Patent Office

Office européen des brevets

(11) Publication number: **0 397 340**
**A1**

## EUROPEAN PATENT APPLICATION

(21) Application number: **90304328.9**

(22) Date of filing: **23.04.90**

(51) Int. Cl.⁵: **E04D 3/36, E04D 5/14**

(30) Priority: **12.05.89 ZA 893573**

(43) Date of publication of application:
**14.11.90 Bulletin 90/46**

(84) Designated Contracting States:
**BE DE ES FR GB IT NL SE**

(71) Applicant: **Marahall, John Derek Charles**
**Lasswade House, Lasswade Road,**
**Constantia**
**Cape Town, Cape Province(ZA)**

(72) Inventor: **Marahall, John Derek Charles**
**Lasswade House, Lasswade Road,**
**Constantia**
**Cape Town, Cape Province(ZA)**

(74) Representative: **Newby, John Ross et al**
**J.Y. & G.W. Johnson Furnival House 14/18**
**High Holborn**
**London WC1V 6DE(GB)**

(54) Sealing structures for use with fastening elements.

(57) A sealing structure is disclosed for use in conjunction with a fastening element which secures a roofing or cladding sheet to an underlying form work. The sealing structure comprises a washer (10) which includes a body (12) which has a central opening (14) in it. A skirt (22) flares out from the body and has seals (26,24) on the underside of it. A cap (28) is provided which fits onto the washer (10). The cap and body have beads (20,34) which inter-engage to hold the cap on the washer.

FIG 3

EP 0 397 340 A1

## Sealing structures for use with fastening elements

FIELD OF THE INVENTION

THIS INVENTION relates to sealing structures for use with fastening elements.

BACKGROUND TO THE INVENTION

Roofing sheets have always been popular for use where large roof areas must be covered eg in factory buildings. More recently it has become fashionable to clad the walls of office and factory buildings with coloured sheets. In both cases there is an underlying structure and fastening elements passed through the sheets and into the underlying structure secure the sheets in place.

Rusting of the fastening elements, and deterioration of the sealing structures used in conjunction therewith, have always been problems. The fastening elements are either driven-in using a screw driver or hammered in. In both cases the protective galvanising can be chipped and rusting ensues.

Plastics material is often used in the sealing structure. Unless protected this can suffer ultra-violet degradation. In some known forms a cone-like metal cap partly conceals the plastics portion of the sealing structure.

OBJECTS OF THE INVENTION

The main object of the present invention is to provide a sealing structure which protects the fastening element.

A further object of the present invention is to provide a sealing structure which can be coloured and which can thus be used in aesthetically pleasing ways with coloured cladding and roofing sheets.

A still further object of the present invention is to provide a sealing structure which is protected against ultra-violet degradation.

BRIEF DESCRIPTION OF THE INVENTION

According to the present invention there is provided a sealing structure for use with a fastening element in securing a first component to an underlying second component, the sealing structure comprising a cap and a washer,
the washer having a body in which there is a central opening for receiving a fastening element, a conical skirt which flares outwardly from the body and the free edge of which, in use, bears on said first component, and a circumferentially extending outwardly directed bead on said body, and
the cap comprising a transverse end wall and a peripheral wall, the peripheral wall having a circumferentially extending bead on the inner surface thereof, the beads of the washer and cap co-operating in use so as releasably to secure the cap to the washer and cover the head of a fastening element passed through said central opening.

In the preferred form flexible teeth protrude inwardly from said body into said central opening and serve both to guide and to grip a fastening element driven through the central opening.

Said washer can have at least one circumferentially extending sealing rib standing proud of the inner face thereof, said rib contacting said first component when, in use, the skirt is flattened as a fastening element is tightened.

Said cap and said washer can be injection moulded in synthetic plastics material, the synthetic plastics material including an ultra violet inhibiter. The preferred synthetic plastics material is polyethylene.

To form a circumferentially outermost seal between the washer and a first component, said washer can include an axially extending rim around the edge of the skirt remote from the body.

The free edge of the peripheral wall of the cap can be chamfered so as to facilitate expansion of said free edge as the cap is pressed onto the body.

In a preferred form said central opening is countersunk to provide a conical surface on which, in use, the head of a fastening element bears.

BRIEF DESCRIPTION OF THE DRAWINGS

For a better understanding of the present invention, and to show how the same may be carried into effect, reference will now be made, by way of example, to the accompanying drawing in which:

Figure 1 is a top plan view of a sealing structure;

Figure 2 is an underneath plan view of the sealing structure; and

Figure 3 is a section on the line III-III of Figure 1;

DETAILED DESCRIPTION OF THE DRAWINGS

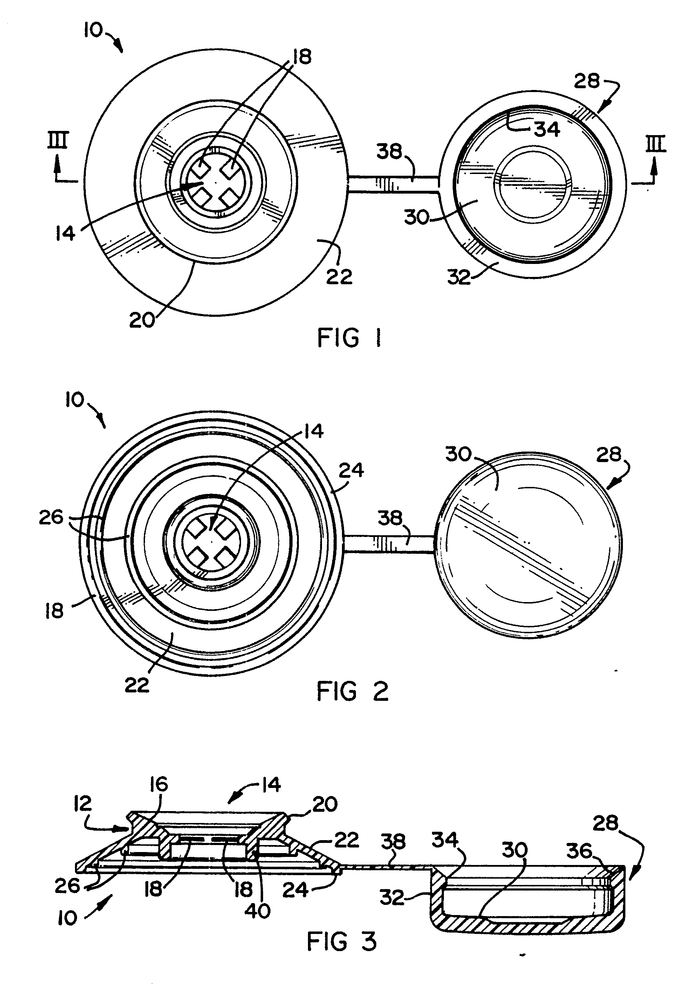

The sealing structure illustrated comprises a cap and a washer and is a one piece injection moulding of a synthetic plastics material. Polyethylene, or other suitable material, which contains an ultra violet inhibiter to slow down degradation of the product due to exposure to ultra violet radiation, can be used. The washer, designated 10, comprises a short cylindrical body 12 which has a central opening 14 in it. The opening 14 is countersunk so as to provide a generally conical surface 16 compatible with the shape of the head of a fastening element (not shown) such as a screw which, in use, is passed downwardly through the opening 14. Teeth 18 protrude into the opening 14 from the body 12, the teeth being flexible and serving both to guide and to grip a fastening element passed through the opening 14. At the upper end of the body 12, as viewed in Figure 3, there is a circumferentially extending peripheral bead 20. The bead 20 is, in the illustrated embodiment, continuous but could, if desired, be discontinuous.

A skirt 22 flares outwardly from the end of the body 12 remote from the bead 20. The skirt 22, as best seen in Figure 3 terminates in an axially extending rim 24. Two sealing ribs 26 are provided on the inner face of the skirt 22. The ribs 26 stand proud of the surface of the skirt, are flexible and, in plan, are circular. They thus extend entirely around the periphery of the skirt 22 concentric with rim 24.

The cap 28 illustrated comprises a transverse end wall 30 and a peripheral wall 32 integral with the end wall 30. On the inner face of the wall 32 here is a circumferentially extending bead 34. In the illustrated embodiment the bead 34 is continuous but it could be discontinuous. The free edge of the peripheral wall 32 is chamfered, as indicated by the reference numeral 36, for a purpose which will be apparent hereinafter.

The cap 28 is joined to the skirt 22 by a strap 38. The body 12 is extended downwardly by a short sleeve 40.

The sealing structure illustrated is primarily intended for use in conjunction with fastening elements which secure roofing sheets to the underlying framework of a roof. It can, however, be used with fastening elements which secure cladding sheets to a vertically extending underlying framework. The sealing structure can be used in conjunction with screws (self-tapping or otherwise) and nails. The use of the sealing structure in conjunction with simple wood screws will be described hereinafter.

The washer 10 is placed with its central opening 14 in alignment with the screw hole in the roof or cladding sheet. The screw is then inserted through the opening 14, through the hole in the roofing or cladding sheet, and its tip engaged with the framework. The screw is then tightened until eventually the underside of its head engages the surface 16 which encircles the opening 14. Further tightening flattens the washer 10. More specifically, the diameter of the rim 24 increases and the axial length of the washer 10 decreases. When the screw is fully driven home the underside of the body 12 and the underside of the skirt 22 lie in substantially the same plane and are pressed against the roofing or cladding sheet. The rim 24 and ribs 26 together form a labyrinth seal which inhibits ingress of moisture between the washer 10 and the roofing or cladding sheet.

To conceal and protect the head of the screw, the cap 28 is pressed onto the washer 10. As this is done, the chamfered surface 36 of the cap engages the rim 20. As the cap is pressed on its diameter is increased slightly until the bead 34 snaps over the bead 20. The bead 34, by virtue of its engagement with the bead 20, prevents the cap coming off the washer unless it is prised off. Furthermore, because the cap tightly grips the washer, ingress of moisture to the area above the head of the screw is prevented.

The entire structure can be moulded in coloured synthetic plastics material.

If the fastening element is to enter a curving surface, then a soft resilient disc washer can be provided below the washer 10. The fastening element passes through the disc washer and enhances the sealing effect.

## Claims

1. A sealing structure for use with a fastening element in securing a first component to an underlying second component, the sealing structure including a washer (10) having a body (12) in which there is a central opening (14) for receiving a fastening element and a conical skirt (22) which flares outwardly from the body and the free edge of which, in use, bears on said first component, characterized by a circumferentially extending outwardly directed bead (20) on said body, and by a cap (28) comprising a transverse end wall (30) and a peripheral wall (32), the peripheral wall (32) having a circumferentially extending bead (34) on the inner surface thereof, the beads (20, 34) of the washer and cap co-operating in use so as releasably to secure the cap (28) to the washer (10) and cover the head of a fastening element passed through said central opening (14).

2. A structure according to claim 1, characterized in that flexible teeth (18) protrude inwardly from said body (12) into said central opening (14) and serve both to guide and to grip a fastening element driven through the central opening.

3. A structure according to claim 1 or 2, characterized in that said washer (10) has at least one circumferentially extending sealing rib (26) standing proud of the inner face thereof, said rib contacting said first component when, in use, the skirt is flattened as a fastening element is tightened.

4. A structure according to any one of claims 1 to 3, characterized in that said cap and said washer are injection moulded in synthetic plastics material, the synthetic plastics material including an ultra violet inhibiter.

5. A structure according to claim 4, characterized in that the synthetic plastics material is polyethylene.

6. A structure according to any of the preceding claims, and characterized by an axially protruding rim (24) around the edge of the skirt (22) remote from the body (12).

7. A structure according to any of the preceding cLaims, characterized in that the free edge of the peripheral wall (32) of the cap is chamfered (36) so as to facilitate expansion of said free edge as the cap is pressed onto the body (12).

8. A structure according to any of the preceding claims, characterized in that said central opening (14) is countersunk to provide a conical surface (16) on which, in use, the head of a fastening element bears.

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 300 929 (A. FISCHER)<br>* Column 2, line 40 - column 3, line 15; figure * | 1,2,6,7 | E 04 D 3/36<br>E 04 D 5/14 |
| Y | | 3,8 | |
| A | | 4,5 | |
| | --- | | |
| A | DE-B-1 198 039 (A. FISCHER)<br>* Column 3, lines 3-23; figures 1,2,4 * | 1,2,6,8 | |
| | --- | | |
| Y | FR-A-1 292 642 (A. FISCHER)<br>* Page 1, column 2, line 36 - page 2, column 1, line 21; figures 1-3 * | 3 | |
| A | | 6,7 | |
| | --- | | |
| A | GB-A- 885 160 (TURNERS ASBESTOS CEMENT)<br>* Page 1, lines 26-35; figures 1-6 * | 1,4,5 | |
| | --- | | |
| A | FR-A-2 031 866 (ATELIERS ETANCO)<br>* Page 1, lines 34-36; figures 1-3 * | 1,4 | |
| | --- | | TECHNICAL FIELDS SEARCHED (Int. Cl.5) |
| Y | GB-A-2 190 452 (DUNLOP CONSTRUCTION)<br>* Page 2, lines 101-108; page 3, lines 111-120; figures 1-3,8 * | 8 | E 04 D |
| A | | 1,4 | |
| | --- | | |
| A | GB-A-1 116 444 (ROBERTSON CO.)<br>* Page 2, lines 43-49; figures 1,2 * | 4 | |
| | --- | | |
| A | GB-A- 771 555 (MILLER)<br>* Page 2, lines 17-23; figures 1-3 *<br>----- | 1,4 | |

The present search report has been drawn up for all claims

| Place of search | Date of completion of the search | Examiner |
|---|---|---|
| THE HAGUE | 19-07-1990 | RIGHETTI R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)